# EUROPEAN PATENT APPLICATION

(11) **EP 2 477 173 A1**
(43) Date of publication of application: **18.07.2012**
(21) Application number: 10823191.1
(22) Date of filing: 13.10.2010
(51) Int. Cl.: G09G 3/28, G02B 27/22, G09G 3/20, H04N 5/66, H04N 13/04

(54) **PLASMA DISPLAY DEVICE DRIVE METHOD, PLASMA DISPLAY DEVICE AND PLASMA DISPLAY SYSTEM**

(30) Priority: 13.10.2009 JP 2009236380
(71) Applicant: Panasonic Corporation, Kadoma-shi Osaka 571-8501 (JP)
(72) Inventor: ORIGUCHI, Takahiko, Osaka-shi, Osaka 540- 6207 (JP); SHIOZAKI, Yuya, Osaka-shi, Osaka 540- 6207 (JP); KIGO, Shigeo, Osaka-shi, Osaka 540- 6207 (JP); SHOJI, Hidehiko, Osaka-shi, Osaka 540- 6207 (JP); ISHIZUKA, Mitsuhiro, Osaka-shi, Osaka 540- 6207 (JP)
(74) Representative: Vigand, Philippe
(86) International application number: PCT/JP2010/006073
(87) International publication number: WO 2011/045923

(57) **Abstract**

A high-quality stereoscopic image is displayed by suppressing crosstalk between an image for the right eye and an image for the left eye and stabilizing an address discharge. For this purpose, in the method for driving the plasma display apparatus, an image for the right eye and an image for the left eye are alternately displayed on the plasma display panel by alternately repeating a field for the right eye and a field for the left eye. In each of the field for the right eye and the field for the left eye, the subfield having the smallest luminance weight is placed first, the subfield having the largest luminance weight is placed next, and the other subfields are placed thereafter so as to have luminance weights sequentially decreasing.

## Description

### TECHNICAL FIELD

The present invention relates to a plasma display apparatus driving method, a plasma display apparatus, and a plasma display system that alternately display, on the plasma display panel, an image for the right eye and an image for the left eye that can be stereoscopically viewed, using a pair of shutter glasses.

### BACKGROUND ART

An AC surface discharge panel, i.e. a typical plasma display panel (hereinafter, simply referred to as "panel"), has a front substrate and a rear substrate facing each other. A plurality of display electrode pairs, each including a scan electrode and a sustain electrode, is formed on the front substrate. A plurality of data electrodes is formed on the rear substrate. A large number of discharge cells are formed between the substrates. Ultraviolet rays are generated by gas discharge in the discharge cells. The ultraviolet rays excite phosphors of red color, green color, and blue color so as to cause light emission for color display.

A typical driving method for the panel is a subfield method. In the subfield method, one field period is divided into a plurality of subfields and gradations are displayed by combination of the subfields where the discharge cells are lit. Each of the subfields has an initializing period, an address period, and a sustain period.

In the initializing periods, an initializing operation is performed so as to cause an initializing discharge and form wall charge necessary for the subsequent address operation. The initializing operation includes the following two types: a forced initializing operation for causing an initializing discharge regardless of the operation in the immediately preceding subfield; and a selective initializing operation for causing an initializing discharge only in the discharge cells having undergone an address discharge in the immediately preceding subfield.

In the address periods, an address discharge is caused selectively in the discharge cells in response to an image to be displayed so as to form wall charge in the discharge cells.

In the sustain periods, sustain pulses are applied alternately to the scan electrodes and the sustain electrodes so as to cause a sustain discharge and cause the phosphor layers of the corresponding discharge cells to emit light. Thereby, an image is displayed. The light emission of the phosphor layers caused by this sustain discharge is a light emission related to gradation display. The light emission caused by the forced initializing operation is a light emission unrelated to gradation display.

In the subfield method, the following driving method is considered. This driving method enhances the contrast by reducing the luminance in display of black, i.e. the lowest gradation, and minimizing the light emission unrelated to gradation display. Patent Literature 1, for example, discloses a driving method in which the forced initializing operation is performed once in one field, using a gently-changing ramp waveform voltage.

Further, methods for displaying a stereoscopic image using such a panel are considered. One of the known methods is to divide a plurality of subfields into a subfield group for displaying images for the right eye and a subfield group for displaying images for the left eye, and to open and close the shutters of a pair of shutter glasses in synchronization with the start of the address period of the first subfield of each subfield group (see Patent Literature 2, for example).

For stereoscopic view by such a method, the user needs to view different images with the right eye and the left eye. For this purpose, a pair of shutter glasses including a shutter for the right eye and a shutter for the left eye is used. In the period during which an image for the right eye is displayed, the right eye shutter is opened and the left eye shutter is closed, so that the left eye cannot view the image for the right eye. In the period during which an image for the left eye is displayed, the left eye shutter is opened and the right eye shutter is closed, so that the right eye cannot view the image for the left eye.

However, the phosphors used in the panel have a long afterglow time. There is a phosphor material that has a characteristic of persistence of afterglow for several milliseconds after the completion of a sustain discharge. Therefore, even after the period for display of an image for the right eye has been completed, the image for the right eye is displayed for a short while in some cases. Hereinafter, the phenomenon of image display even after the completion of the display period is referred to as "afterimage".

When an image for the left eye is displayed before the afterimage of an image for the right eye disappears, the phenomenon of entry of the image for the right eye into the image for the left eye occurs. Similarly, when an image for the right eye is displayed before the afterimage of an image for the left eye disappears, the phenomenon of entry of the image for the left eye into the image for the right eye occurs. Hereinafter, such a phenomenon is referred to as "crosstalk". Occurrence of crosstalk makes stereoscopic view difficult.

In the driving method in which the number of forced initializing operations is reduced, the amount of wall charge and the amount of priming necessary for causing a stable address discharge depend largely on the arrangement of subfields. Insufficient priming, reduced wall charge, or the like can destabilize the address discharge and degrade the image display quality.

### Citation List

### Patent Literature

**PTL1**
   Japanese Patent Unexamined Publication No. 2000-242224
**PTL2**
   Japanese Patent Unexamined Publication No. 2000-112428

### SUMMARY OF THE INVENTION

In a method for driving a plasma display apparatus of the present invention,
the plasma display apparatus including the following elements:
a panel having a plurality of discharge cells disposed therein, each of the discharge cells having a scan electrode, a sustain electrode, and a data electrode; and
a driver circuit for driving the panel,
the driving method includes:
alternately displaying an image for the right eye and an image for the left eye on the panel by alternately repeating a field for the right eye and a field for the left eye, the field for the right eye having a plurality of subfields and displaying an image signal for the right eye, the field for the left eye having a plurality of subfields and displaying an image signal for the left eye; and
in each of the field for the right eye and the field for the left eye, placing the subfield having the smallest luminance weight first, the subfield having the largest luminance weight next, and the other subfields thereafter so as to have luminance weights sequentially decreasing.

This method stabilizes an address discharge while suppressing crosstalk between the image for the right eye and the image for the left eye, and enables the plasma display apparatus to display a high-quality stereoscopic image.

A plasma display apparatus of the present invention includes the following elements:
a panel having a plurality of discharge cells disposed therein, each of the discharge cells having a scan electrode, a sustain electrode, and a data electrode; and
a driver circuit for driving the panel.
The driver circuit alternately displays an image for the right eye and the image for a left eye on the panel by alternately repeating a field for the right eye and a field for the left eye. The field for the right eye has a plurality of subfields and displays an image signal for the right eye, and the field for the left eye has a plurality of subfields and displays an image signal for the left eye. The driver circuit displays the image for the right eye and the image for the left eye on the panel in a manner such that, in each of the field for the right eye and the field for the left eye, the subfield having the smallest luminance weight is placed first, the subfield having the largest luminance weight is placed next, and the other subfields are placed thereafter so as to have luminance weights sequentially decreasing.

This configuration stabilizes an address discharge while suppressing crosstalk between the image for the right eye and the image for the left eye, and enables the plasma display apparatus to display a high-quality stereoscopic image.

A plasma display system of the present invention includes a pair of shutter glasses and the above plasma display apparatus. The pair of shutter glasses includes a receiver for receiving a timing signal output from the timing signal output part, and a right eye shutter and a left eye shutter. The right eye shutter and the left eye shutter are opened and closed in response to the timing signal output from the timing signal output part.

### BRIEF DESCRIPTION OF DRAWINGS

Fig. 1 is an exploded perspective view showing a structure of a panel in accordance with a first exemplary embodiment of the present invention.
Fig. 2 is an electrode array diagram of the panel in accordance with the first exemplary embodiment.
Fig. 3 shows a circuit block diagram of a plasma display apparatus and a diagram of a plasma display system in accordance with the first exemplary embodiment.
Fig. 4 is a chart of driving voltage waveforms applied to respective electrodes of the panel in accordance with the first exemplary embodiment.
Fig. 5 is a schematic diagram showing a subfield structure in accordance with the first exemplary embodiment.
Fig. 6 is a table showing coding in accordance with the first exemplary embodiment.
Fig. 7 is a table showing coding in accordance with a second exemplary embodiment of the present invention.

### DESCRIPTION OF EMBODIMENTS

Hereinafter, a plasma display apparatus in accordance with exemplary embodiments of the present invention is described, with reference to the accompanying drawings.

### FIRST EXEMPLARY EMBODIMENT

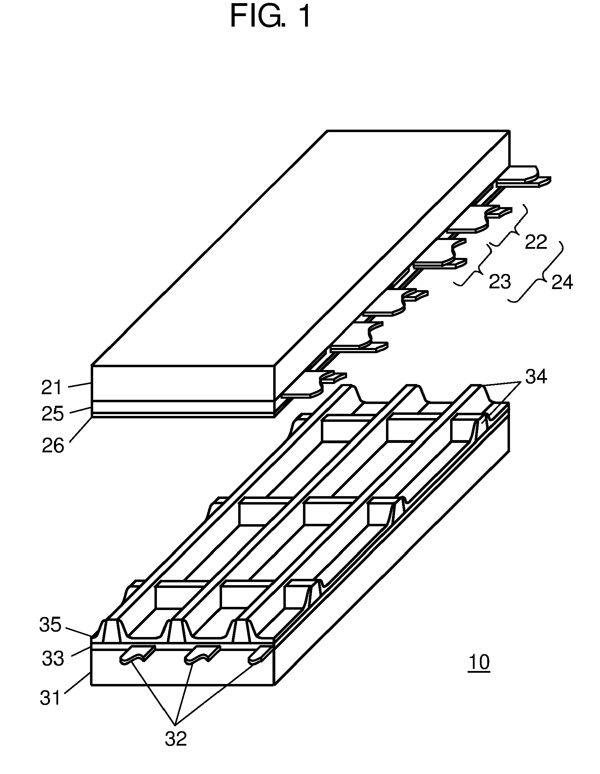

Fig. 1 is an exploded perspective view showing a structure of panel 10 in accordance with the first exemplary embodiment of the present invention. A plurality of display electrode pairs 24, each including scan electrode 22 and sustain electrode 23, is disposed on glass front substrate 21. Dielectric layer 25 is formed so as to cover display electrode pairs 24. Protective layer 26 is formed over dielectric layer 25. A plurality of data electrodes 32 is formed on rear substrate 31. Dielectric layer 33 is formed so as to cover data electrodes 32, and mesh barrier ribs 34 are formed on the dielectric layer. On the side faces of barrier ribs 34 and on dielectric layer 33, phosphor layers 35 for emitting light of red color, green color, and blue color are formed. For phosphor layers 35, BaMgAl₁₀O₁₇: Eu can be used as a blue phosphor, Zn₂SiO₄: Mn can be used as a green phosphor, and (Y, Gd) BO₃: Eu can be used as a red phosphor. The phosphors that form phosphor layers are not limited to the above phosphors.

Front substrate 21 and rear substrate 31 face each other such that display electrode pairs 24 intersect data electrodes 32 with a small discharge space sandwiched between the electrodes. The outer peripheries of the substrates are sealed with a sealing material, such as a glass frit. In the discharge space, a mixture gas of neon and xenon, for example, is sealed as a discharge gas. The discharge space is partitioned into a plurality of compartments by barrier ribs 34. Discharge cells are formed in the intersecting parts of display electrode pairs 24 and data electrodes 32. The discharge and light emission of these discharge cells display an image.

The structure of panel 10 is not limited to the above, and may include barrier ribs in a stripe pattern, for example.

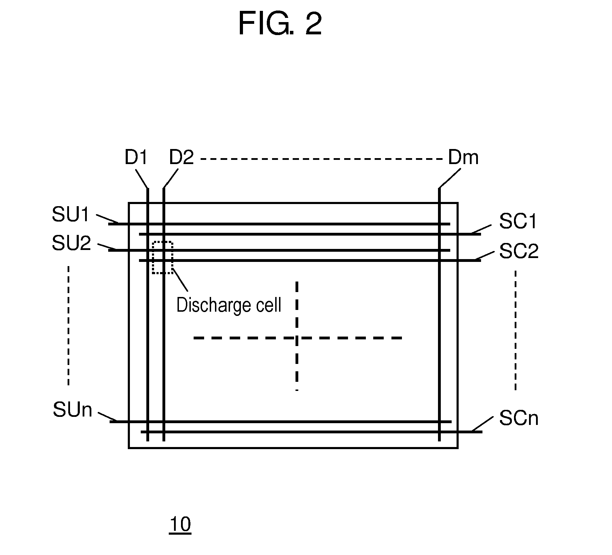

Fig. 2 is an electrode array diagram of panel 10 in accordance with the first exemplary embodiment of the present invention. Panel 10 has n scan electrode SC1 through scan electrode SCn (scan electrodes 22 in Fig. 1) and n sustain electrode SU1 through sustain electrode SUn (sustain electrodes 23 in Fig. 1) both long in the row direction, and m data electrode D1 through data electrode Dm (data electrodes 32 in Fig. 1) long in the column direction. A discharge cell is formed in the part where a pair of scan electrode SCi (i=1 through n) and sustain electrode SUi intersects one data electrode Dj (j=1 through m). Then, m×n discharge cells are formed in the discharge space. For example, a red phosphor is applied to the discharge cell having data electrode Dp (p=3×q where q is an integer equal to or smaller than m/3), a green phosphor is applied to the discharge cell having data electrode Dp+1, and a blue phosphor is applied to the discharge cell having data electrode Dp+2, as phosphor layers 35.

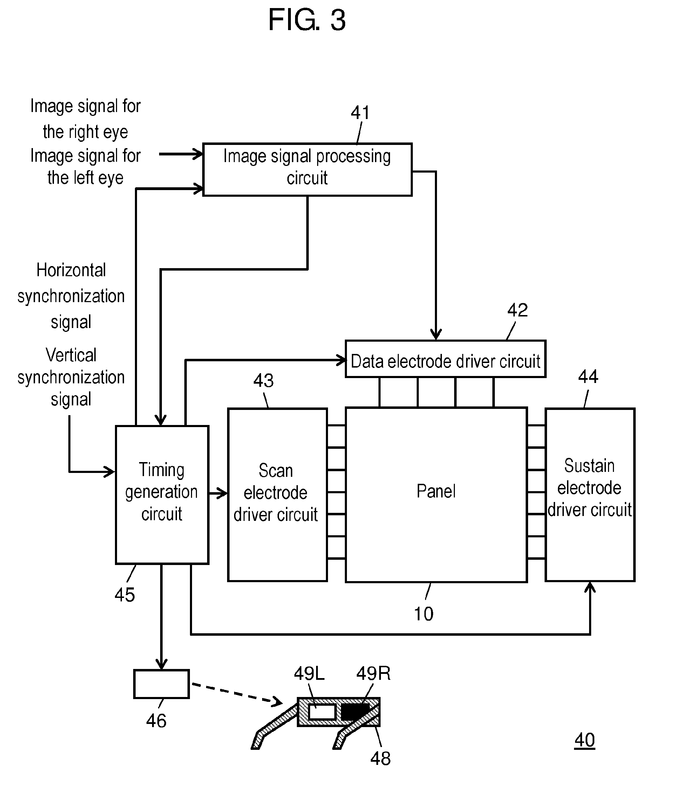

Fig. 3 shows a circuit block diagram of plasma display apparatus 40 and a diagram of a plasma display system in accordance with the first exemplary embodiment of the present invention. Plasma display apparatus 40 includes the following elements:
panel 10 having a plurality of discharge cells arranged therein, each of the discharge cells having scan electrode 22, sustain electrode 23, and data electrode 32; and
a driver circuit for driving panel 10.
The driver circuit includes image signal processing circuit 41; data electrode driver circuit 42; scan electrode driver circuit 43; sustain electrode driver circuit 44; timing generation circuit 45; and electric power supply circuits (not shown) for supplying electric power necessary for each circuit block. Plasma display apparatus 40 also includes pair of shutter glasses 48 to be used by the user, and timing signal output part 46 for outputting a timing signal for opening and closing shutters to pair of shutter glasses 48.

Image signal processing circuit 41 receives an image signal for the right eye and an image signal for the left eye alternately in each field, and converts the image signal for the right eye into the image data for the right eye showing light emission and no light emission in each subfield, and the image signal for the left eye into the image data for the left eye showing light emission and no light emission in each subfield. Data electrode driver circuit 42 converts the image data for the right eye and the image data for the left eye into an address pulse corresponding to each of data electrode D1 through data electrode Dm, and applies the address pulse to each of data electrode D1 through data electrode Dm.

Timing generation circuit 45 generates various timing signals for controlling the operation of each circuit block, based on a horizontal synchronization signal and a vertical synchronization signal, and supplies the generated timing signals to each circuit block. The timing generation circuit supplies the timing signals for opening and closing the shutters of pair of shutter glasses 48 to timing signal output part 46.

Timing signal output part 46 converts the timing signals into infrared signals, for example, using a light-emitting element, such as a light-emitting diode (LED), and supplies the converted signals to pair of shutter glasses 48. Scan electrode driver circuit 43 applies driving voltage waveforms to each of scan electrodes 22 in response to the timing signals.

Sustain electrode driver circuit 44 applies driving voltage waveforms to each of sustain electrodes 23 in response to the timing signals.

Pair of shutter glasses 48 includes a receiver for receiving the timing signals output from timing signal output part 46, and right eye liquid crystal shutter 49R and left eye liquid crystal shutter 49L. Right eye liquid crystal shutter 49R and left eye liquid crystal shutter 49L are opened and closed in response to the timing signals.

Next, driving voltage waveforms for driving panel 10 and the operation thereof are described. Plasma display apparatus 40 displays gradations by a subfield method in which one field is divided into a plurality of subfields and light emission and no light emission in each discharge cell is controlled in each subfield. In this exemplary embodiment, the user views an image that is displayed on panel 10 by alternately repeating a field for the right eye and a field for the left eye, using pair of shutter glasses 48 in which the shutters are opened and closed in synchronization with the field for the right eye and the field for the left eye. The field for the right eye has a plurality of subfields and displays an image signal for the right eye. The field for the left eye has a plurality of subfields and displays an image signal for the left eye. In this manner, the user stereoscopically views the image displayed on panel 10. In this exemplary embodiment, the field frequency is set to 120 Hz, which is twice the general field frequency, such that the user can view a stereoscopic view without flickering (flickers).

In the field for the right eye and the field for the left eye, only the signals of the images to be displayed are different. The field structure, e.g. the number of subfields forming one field, the luminance weights of the respective subfields, and the arrangement of the subfields, is identical. First, the structure of one field and the driving voltage waveforms applied to the respective electrodes are described.

Each field has a plurality of subfields, and each subfield has an initializing period, an address period, and a sustain period.

In the initializing periods, an initializing operation is performed so as to generate an initializing discharge and form wall charge necessary for the subsequent address discharge on the respective electrodes. The initializing operation at this time includes the following two types: a forced initializing operation for forcedly causing an initializing discharge regardless of whether a discharge has occurred; and a selective initializing operation for selectively causing an initializing discharge only in the discharge cells having undergone an address discharge in the immediately preceding address period.

In the address periods, an address operation is performed so as to generate an address discharge and form wall charge in the discharge cells to be lit.

In the sustain periods, a sustain operation is performed so as to apply sustain pulses corresponding in number to the luminance weights alternatively to display electrode pairs 24, and thereby generates a sustain discharge in the discharge cells having undergone an address discharge and lights the discharge cells.

In this exemplary embodiment, one field is divided into five subfields (SF1, SF2, SF3, SF4, and SF5). Then, a forced initializing operation is performed in the initializing period of SF1, i.e. a subfield placed first in the field, and a selective initializing operation is performed in the initializing periods of SF2 through SF5, i.e. subfields placed thereafter. The subfields have respective luminance weights of 1, 16, 8, 4, and 2. In this manner, in this exemplary embodiment, the subfield having the smallest luminance weight is placed first in the field, the subfield having the largest luminance weight is placed next, the other subfields are placed thereafter so as to have luminance weights sequentially decreasing, and the subfield having the second smallest luminance weight is placed last in the field.

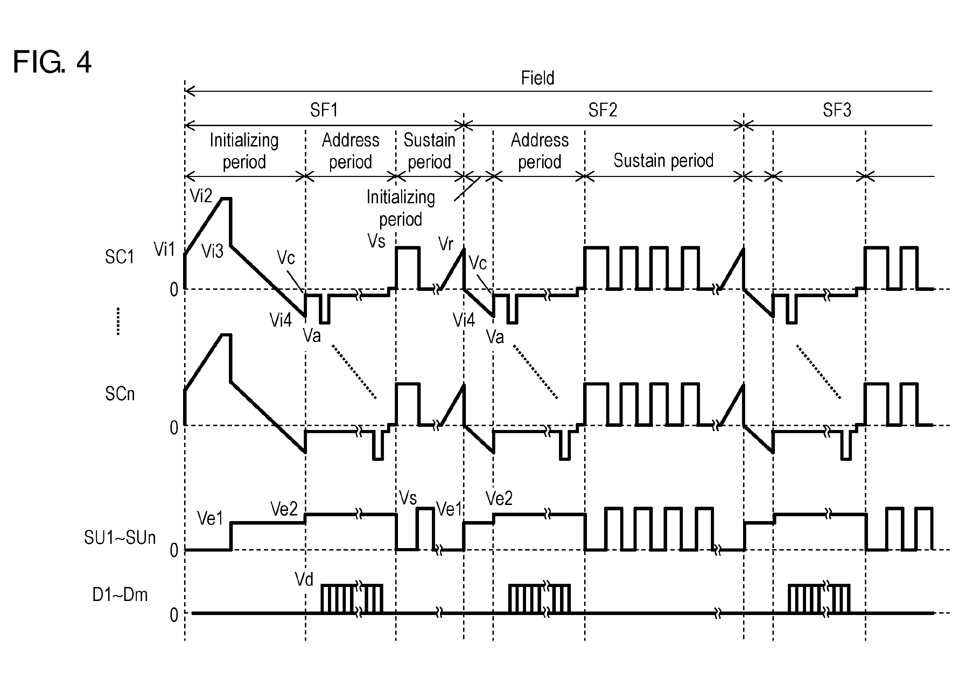

Fig. 4 is a chart of driving voltage waveforms applied to the respective electrodes of panel 10 in accordance with the first exemplary embodiment of the present invention. Fig. 4 shows driving voltage waveforms in SF1 through SF3.

In the first half of the initializing period of SF1, where a forced initializing operation is performed, voltage 0 (V) is applied to data electrode D1 through data electrode Dm, and voltage 0 (V) is applied to sustain electrode SU1 through sustain electrode SUn. A ramp waveform voltage gently rising from voltage Vi1 toward voltage Vi2 is applied to scan electrode SC1 through scan electrode SC. Here, voltage Vi1 is lower than a discharge start voltage, and voltage Vi2 exceeds the discharge start voltage with respect to sustain electrode SU1 through sustain electrode SUn. While this ramp waveform voltage is rising, a weak initializing discharge occurs between scan electrode SC1 through scan electrode SCn and sustain electrode SU1 through sustain electrode SUn, and between scan electrode SC1 through scan electrode SCn and data electrode D1 through data electrode Dm. Then, negative wall voltage accumulates on scan electrode SC1 through scan electrode SCn, and positive wall voltage accumulates on data electrode D1 through data electrode Dm and sustain electrode SU1 through sustain electrode SUn. The wall voltage on the electrodes means voltages that are generated by the wall charge accumulated on the dielectric layers covering the electrodes, the protective layer, the phosphor layers, or the like.

In the second half of the initializing period, positive voltage Ve1 is applied to sustain electrode SU1 through sustain electrode SUn. A ramp waveform voltage gently falling from voltage Vi3 toward voltageVi4 is applied to scan electrode SC1 through scan electrode SCn. Here, voltage Vi3 is lower than the discharge start voltage, and voltage Vi4 exceeds the discharge start voltage with respect to sustain electrode SU1 through sustain electrode SUn. During this application, a weak initializing discharge occurs between scan electrode SC1 through scan electrode SCn and sustain electrode SU1 through sustain electrode SUn, and between scan electrode SC1 through scan electrode SCn and data electrode D1 through data electrode Dm. This weak discharge reduces the negative wall voltage on scan electrode SC1 through scan electrode SCn and the positive wall voltage on sustain electrode SU1 through sustain electrode SU, and adjusts the positive wall voltage on data electrode D1 through data electrode Dm to a value suitable for the address operation. In this manner, the forced initializing operation for forcedly causing an initializing discharge in all the discharge cells is completed.

In the subsequent address period, voltage Ve2 is applied to sustain electrode SU1 through sustain electrode SUn, and voltage Vc is applied to each of scan electrode SC1, scan electrode SC2, ... scan electrode SCn.

Next, a scan pulse at negative voltage Va is applied to scan electrode SC1 in the first line. Further, an address pulse at positive voltage Vd is applied to data electrode Dk (k=1 through m) of a discharge cell to be lit in the first line among data electrode D1 through data electrode Dm. The voltage difference between the intersecting part of data electrode Dk and scan electrode SC1 in the discharge cell applied with the address pulse is obtained by adding the difference between the wall voltage on data electrode Dk and the wall voltage on scan electrode SC1 to a difference in externally applied voltage (voltage Vd-voltage Va). Thus, the voltage difference exceeds the discharge start voltage. Then, an address discharge occurs between data electrode Dk and scan electrode SC1, and between sustain electrode SU1 and scan electrode SC1. Positive wall voltage accumulates on scan electrode SC1 and negative voltage accumulates on sustain electrode SU1. Negative wall voltage also accumulates on data electrode Dk. In this manner, the address operation is performed so as to generate an address discharge in the discharge cells to be lit in the first line and accumulate wall voltage on the respective electrodes. In contrast, the voltage in the intersecting parts of scan electrode SC1 and the data electrodes applied with no address pulse does not exceed the discharge start voltage, and thus no address discharge occurs.

Thereafter, the address operation is performed on scan electrode SC2, scan electrode SC3, ..., scan electrode SCn in a similar manner.

In the subsequent sustain period, first, a sustain pulse at voltage Vs is applied to scan electrode SC1 through scan electrode SCn, and voltage 0 (V) is applied to sustain electrode SU1 through sustain electrode SUn. In the discharge cells having undergone the address discharge, the voltage difference between scan electrode SCi and sustain electrode SUi is obtained by adding the difference between the wall voltage on scan electrode SCi and the wall voltage on sustain electrode SUi to voltage Vs. Thus, the voltage difference exceeds the discharge start voltage. Then, a sustain discharge occurs between scan electrode SCi and sustain electrode SUi. Ultraviolet rays generated at this time cause phosphor layers 35 to emit light. With this discharge, negative wall voltage accumulates on scan electrode SCi, and positive wall voltage accumulates on sustain electrode SUi. Positive wall voltage also accumulates on data electrode Dk. In the discharge cells having undergone no address discharge in the address period, no sustain discharge occurs and the wall voltage at the completion of the initializing period is maintained.

Subsequently, voltage 0 (V) is applied to scan electrode SC1 through scan electrode SCn, and a sustain pulse at voltage Vs is applied to sustain electrode SU1 through sustain electrode SUn. In the discharge cells having undergone the sustain discharge, the voltage difference between sustain electrode SUi and scan electrode SCi exceeds the discharge start voltage. Thereby, a sustain discharge occurs between sustain electrode SUi and scan electrode SCi again. Negative wall voltage accumulates on sustain electrode SUi, and positive wall voltage accumulates on scan electrode SCi. In this manner, sustain pulses corresponding in number to the luminance weight are applied alternately to scan electrode SC1 through scan electrode SCn and sustain electrode SU1 through sustain electrode SUn. Thereby, the sustain discharge is continued in the discharge cells having undergone the address discharge in the address period.

At the end of the sustain period, a ramp waveform voltage gently rising toward voltage Vr is applied to scan electrode SC1 through scan electrode SCn. Thereby, while a positive wall voltage is left on data electrode Dk, the wall voltage on scan electrode SCi and sustain electrode SUi is reduced. In this manner, the sustain operation in the sustain period is completed.

In the initializing period of SF2, where a selective initializing operation is performed, voltage Ve1 is applied to sustain electrode SU1 through sustain electrode SUn, and voltage 0 (V) is applied to data electrode D1 through data electrode Dm. A ramp waveform voltage gently falling toward voltage Vi4 is applied to scan electrode SC1 through scan electrode SCn. With this voltage application, a weak initializing discharge occurs in the discharge cells having undergone a sustain discharge in SF1, i.e. the immediately preceding subfield, and reduces the wall voltage on scan electrode SCi and sustain electrode SUi. Since sufficient positive wall voltage is accumulated on data electrode Dk by the immediately preceding sustain discharge, the excess part of this wall voltage is discharged and adjusted to a wall voltage suitable for the address operation. In contrast, in the discharge cells having undergone no sustain discharge in the preceding subfield, no discharge occurs, and the wall voltage at the completion of the initializing period of the preceding subfield is maintained. In this manner, the selective initializing operation is an operation for causing an initializing discharge selectively in the discharge cells where an address operation is performed in the address period of the immediately preceding subfield, i.e. in the discharge cells where a sustain operation is performed in the sustain period of the immediately preceding subfield.

The operation in the subsequent address period is similar to the operation in the address period of SF1, and thus the description thereof is omitted. The operation in the subsequent sustain period is similar to the operation in the sustain period of SF1 except for the number of sustain pulses. The operation in subsequent SF3 through SF5 is similar to the operation in SF2 except for the number of sustain pulses.

The voltage to be applied to the respective electrodes in this exemplary embodiment includes the following values: voltage Vi1=145 (V); voltage Vi2=335 (V); voltage Vi3=190 (V); voltage Vi4=-160 (V); voltage Va=-180 (V); voltage Vc=-35 (V); voltage Vs=190 (V); voltage Vr=190 (V); voltage Ve1=125 (V); voltage Ve2=130 (V); and voltage Vd=60 (V). However, these voltage values are only examples. Preferably, each of the voltage values is set optimally for the characteristics of panel 10, the specifications of plasma display apparatus 40, or the like, as appropriate.

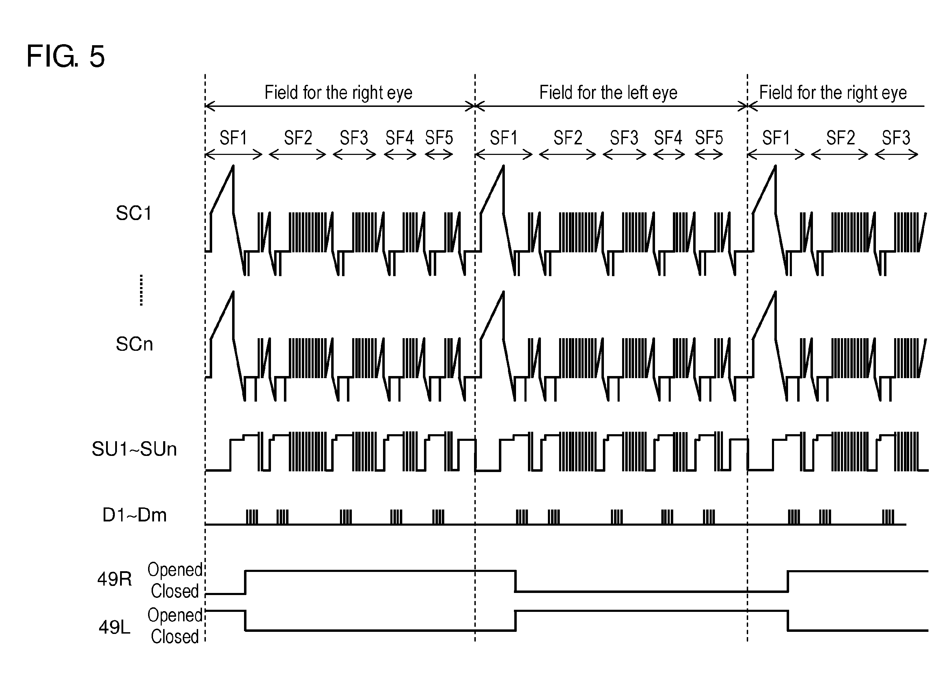

Next, the subfield structure of plasma display apparatus 40 of this exemplary embodiment is described again. Fig. 5 is a schematic diagram showing a subfield structure in accordance with the first exemplary embodiment of the present invention. In this exemplary embodiment, for display of a stereoscopic image, the field frequency is set twice, i.e. 120 Hz, of the general field frequency, and a field for the right eye and a field for the left eye are placed alternately. One field is formed of five subfields (SF1, SF2, SF3, SF4, and SF5). The subfields (SF1, SF2, SF3, SF4, and SF5) have respective luminance weights of 1, 16, 8, 4, and 2.

In this manner, the subfield placed first in the field is the subfield having the smallest luminance weight, the subfield placed second is the subfield having the largest luminance weight, the subfield placed third is the subfield having the second largest luminance weight, the subfield placed fourth is the subfield having the third largest luminance weight, and the subfield placed last is the subfield having the second smallest luminance weight. In the initializing period of the subfield placed first in the field, a forced initializing operation is performed. In the initializing periods of the other subfields, a selective initializing operation is performed.

Right eye liquid crystal shutter 49R and left eye liquid crystal shutter 49L of pair of shutter glasses 48 receive timing signals output from timing signal output part 46, which control pair of shutter glasses 48 in the following manner. Right eye liquid crystal shutter 49R of pair of shutter glasses 48 opens in synchronization with the start of the address period of SF1 of the fields for the right eye, and closes in synchronization with the start of the address period of SF1 of the fields for the left eye. Left eye liquid crystal shutter 49L opens in synchronization with the start of the address period of SF1 of the fields for the left eye, and closes in synchronization with the start of the address period of SF1 of the fields for the right eye.

With the subfields arranged in this manner, pair of shutter glasses 48 is controlled. This control can suppress the crosstalk between the image for the right eye and the image for the left eye and stabilize the address discharge, thereby displaying a high-quality stereoscopic image. Hereinafter, the reason is described.

The intensity of the afterglow of a phosphor has a characteristic of being proportional to the luminance at the light emission of the phosphor and attenuating with a fixed time constant. The emission luminance in the sustain period is higher in a subfield having a larger luminance weight. Thus, in order to reduce the afterglow, it is preferable to place a subfield having a larger luminance weight at an earlier time of the field. Therefore, if only suppression of crosstalk is considered, it is preferable to place subfields so as to have luminance weights sequentially decreasing.

On the other hand, the stability of the address discharge is considered. Because a sustain discharge occurs in a plurality of subfields in a discharge cell displaying a bright gradation, a sufficient amount of priming generated by these sustain discharges is supplied, which can generate a stable address discharge. However, in a discharge cell displaying a dark gradation, especially in a discharge cell to be lit only in the subfield having the smallest luminance weight, insufficient priming is likely to destabilize the address discharge.

In this exemplary embodiment, the subfield having the smallest luminance weight is placed as SF1, where a forced initializing operation is performed in the initializing period. With this structure, an address discharge can be generated while priming generated by the forced initializing operation is left, and thus a stable address discharge can be generated even in a discharge cell to be lit only in the subfield having the smallest luminance weight. Thereafter, the subfields are placed so as to have luminance weights sequentially decreasing. This structure can reduce the afterglow of the phosphors and suppress crosstalk.

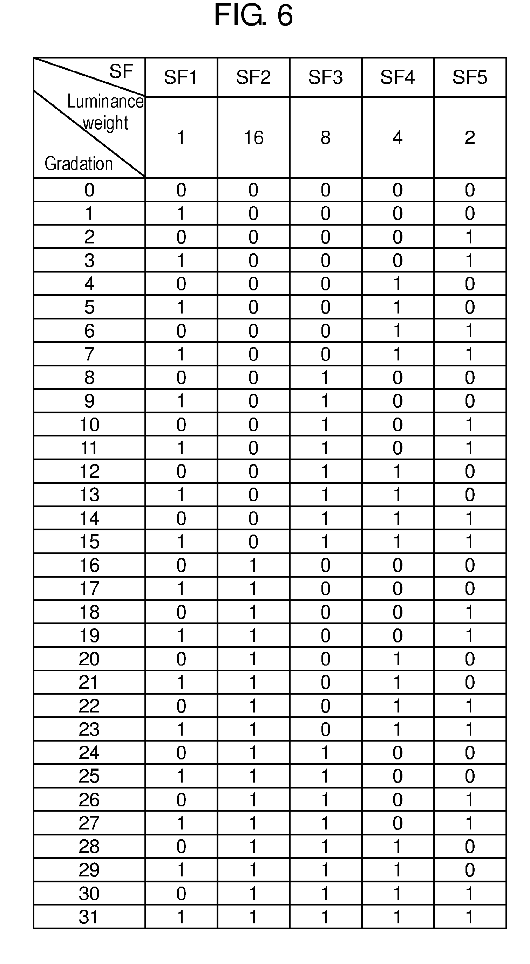

Next, a description is provided for the method for displaying gradations in this exemplary embodiment. Fig. 6 is a table showing the relation between gradations to be displayed and whether an address operation is performed in the subfields (hereinafter, simply referred to as "coding") in accordance with the first exemplary embodiment of the present invention. In Fig. 6, "1" indicates that an address operation is performed, and "0" indicates that no address operation is performed.

For example, in a discharge cell displaying the gradation "0", i.e. black, no address operation is performed in all the subfields, SF1 through SF5. In this case, the discharge cell undergoes no sustain discharge and thus has the lowest luminance.

In a discharge cell displaying the gradation "1", an address operation is performed only in the subfield having the luminance weight "1", and no address operation is performed in the other subfields. In this case, the discharge cell undergoes sustain discharges corresponding in number to the luminance weight "1", and displays a brightness of the gradation "1".

In a discharge cell displaying the gradation "7", an address operation is performed in SF1 having the luminance weight "1", in SF4 having the luminance weight "4", and in SF5 having the luminance weight "2". In this case, the discharge cell undergoes sustain discharges corresponding in number to the luminance weight "1" in the sustain period of SF1, the luminance weight "4" in the sustain period of SF4, and the luminance weight "2" in the sustain period of SF5. Thus, a brightness of the total gradation "7" is displayed.

Similarly for the other gradations, in accordance with the coding shown in Fig. 6, any gradation can be displayed by controlling the address operation such that an address operation or no address operation is performed in each subfield.

By changing the coding with some ideas, further stable address discharge can be generated. An example is described hereinafter as a second exemplary embodiment.

### SECOND EXEMPLARY EMBODIMENT

The structure of panel 10, the circuit block diagram of plasma display apparatus 40, the driving voltage waveforms applied to the respective electrodes of panel 10, and the subfield structure in accordance with the second exemplary embodiment of the present invention are similar to those of the first exemplary embodiment. Thus, the description is omitted. The second exemplary embodiment is different from the first exemplary embodiment in coding.

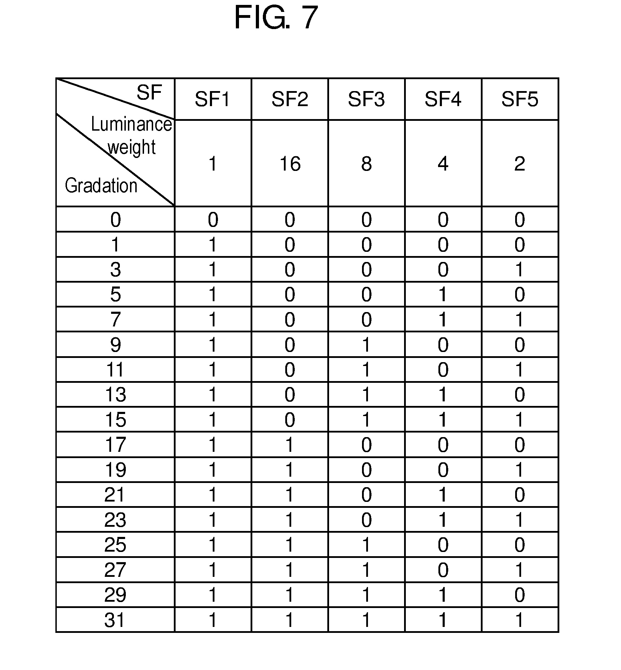

Fig. 7 is a table showing coding in accordance with the second exemplary embodiment of the present invention. In Fig. 7, "1" indicates that an address operation is performed, and "0" indicates that no address operation is performed.

In the second exemplary embodiment, as shown in Fig. 7, in a discharge cell where an address operation is performed in any of the subfields in the field, an address operation is performed also in SF1, i.e. the subfield placed first in the field.

In other words, in a discharge cell where no address operation is performed in the first subfield SF 1, no address operation is performed in the other subfields in the field.

In the second exemplary embodiment, displaying gradations with such coding can cause further stable address discharge and thereby display a high-quality image.

Next, the reason is described. Generally, occurrence of a discharge generates positive and negative charged particles in the discharge space. When these charged particles adhere to the wall of a discharge cell, the particles change the wall voltage and the electric field strength inside the discharge space, thereby affecting the discharge phenomenon.

For instance, when an address discharge occurs in a discharge cell adjacent to a discharge cell where no address operation is performed, the charged particles generated in the former discharge cell can fly to the latter discharge cell and reduce the wall voltage. Such a phenomenon is referred to as "charge decreasing phenomenon".

Excessive reduction in the positive wall voltage on the data electrodes necessary for the address operation can cause operation failure such that no address operation can be performed until a forced initializing operation is performed thereafter. This phenomenon can degrade the image display quality.

The inventors have been experimentally verified that a charge decreasing phenomenon is likely to occur in the address period after the forced initializing operation for causing an initializing discharge by applying a high voltage to all the discharge cells.

The inventors have also been experimentally verified that the charge decreasing phenomenon is unlikely to occur in the address period after the selective initializing operation for applying a gently-falling ramp waveform voltage to the scan electrodes after having applied a gently-rising ramp waveform voltage to the scan electrodes at the end of the sustain period.

The inventors have also verified that the charge decreasing phenomenon is more likely to occur when the panel has an increased level of definition. This is for the following reason. In a high-definition panel, the discharge cells are small and the amount of wall charge determining the wall voltage is small. Thus, even a slight decrease in the amount of wall charge considerably reduces the wall voltage.

However, in the coding of the second exemplary embodiment, when no address operation is performed in the first subfield of each field, no address operation is performed in the subfield succeeding the first subfield of the field. That is, even if the wall voltage of the discharge cell where no address operation is performed in the first address period of the field decreases, no address operation is performed in the succeeding subfield. Thus, the display image is not affected.

With the coding shown in Fig. 7, the gradations "2", "4", "6", or the like cannot be displayed. However, image signal processing may be performed for these gradations using the error diffusion method or the dither method, for example. With such image signal processing, these gradations can be displayed in a pseudo manner.

In the structure described in the first exemplary embodiment and the second exemplary embodiment, one field is formed of five subfields. However, the number of subfields is not limited to the above. For example, increasing the number of subfields can increase the number of gradations displayable on panel 10. In the description of these exemplary embodiments, the luminance weights of the subfields are powers of "2", i.e. 1, 16, 8, 4, and 2. However, the luminance weights are not limited to the above values. Setting the luminance weights to 1, 12, 7, 3, and 2, for example, gives redundancy to the combination of the subfields determining gradations and allows the coding capable of suppressing the occurrence of a moving image false contour.

The specific numerical values shown in the first exemplary embodiment and the second exemplary embodiment are only examples. It is preferable to set each numerical value optimally for the characteristics of the panel, the specifications of the plasma display apparatus, or the like, as appropriate.

### INDUSTRIAL APPLICABILITY

The present invention can display a high-quality stereoscopic image by suppressing the crosstalk between an image for the right eye and an image for the left eye and stabilizing the address discharge. Thus, the present invention is useful as a plasma display apparatus driving method, a plasma display apparatus, and a plasma display system.

### REFERENCE MARKS IN THE DRAWINGS

- 10: Panel
- 22: Scan electrode
- 23: Sustain electrode
- 24: Display electrode pair
- 32: Data electrode
- 40: Plasma display apparatus
- 41: Image signal processing circuit
- 42: Data electrode driver circuit
- 43: Scan electrode driver circuit
- 44: Sustain electrode driver circuit
- 45: Timing generation circuit
- 48: Pair of shutter glasses
- 49R: Right eye liquid crystal shutter
- 49L: Left eye liquid crystal shutter

## Claims

1. A method for driving a plasma display apparatus,
the plasma display apparatus including:
a plasma display panel having a plurality of discharge cells disposed therein, each of the discharge cells having a scan electrode, a sustain electrode, and a data electrode; and
a driver circuit for driving the plasma display panel,
the driving method comprising:
alternately displaying an image for a right eye and an image for a left eye on the plasma display panel by alternately repeating a field for the right eye and a field for the left eye, the field for the right eye having a plurality of subfields and displaying an image signal for the right eye, the field for the left eye having a plurality of subfields and displaying an image signal for the left eye; and
in each of the field for the right eye and the field for the left eye, placing a subfield having a smallest luminance weight first, a subfield having a largest luminance weight next, and other subfields thereafter so as to have luminance weights sequentially decreasing.

2. The driving method of claim 1, wherein a timing signal is generated in synchronization with the field for the right eye and the field for the left eye.

3. The driving method of claim 1, wherein
in an initializing period of the subfield placed first in each of the field for the right eye and the field for the left eye, a forced initializing operation is performed so as to generate an initializing discharge regardless of an operation in the immediately preceding subfield, and
in initializing periods of the subfields placed thereafter, a selective initializing operation is performed so as to generate an initializing discharge in the discharge cells having undergone an address discharge in the immediately preceding subfields.

4. The driving method of claim 1, wherein in the discharge cell for undergoing an address discharge in any subfield in any of the field for the right eye and the field for the left eye, an address discharge is performed also in the subfield placed first in the field for the right eye and the field for the left eye.

5. A plasma display apparatus comprising:
a plasma display panel having a plurality of discharge cells disposed therein, each of the discharge cells having a scan electrode, a sustain electrode, and a data electrode; and
a driver circuit for driving the plasma display panel,
wherein the driver circuit alternately displays an image for a right eye and an image for a left eye on the plasma display panel by alternately repeating a field for the right eye and a field for the left eye, the field for the right eye having a plurality of subfields and displaying an image signal for the right eye, the field for the left eye having a plurality of subfields and displaying an image signal for the left eye, and
the driver circuit displays the image for the right eye and the image for the left eye on the plasma display panel in a manner such that, in each of the field for the right eye and the field for the left eye, a subfield having a smallest luminance weight is placed first, a subfield having a largest luminance weight is placed next, and other subfields are placed thereafter so as to have luminance weights sequentially decreasing.

6. The plasma display apparatus of claim 5, wherein the driver circuit includes a timing signal output part for outputting a timing signal in synchronization with the field for the right eye and the field for the left eye.

7. A plasma display system comprising:
a plasma display apparatus including:
a plasma display panel having a plurality of discharge cells disposed therein, each of the discharge cells having a scan electrode, a sustain electrode, and a data electrode;
a driver circuit for alternately displaying an image for a right eye and an image for a left eye on the plasma display panel by alternately repeating a field for the right eye and a field for the left eye, the field for the right eye having a plurality of subfields and displaying an image signal for the right eye, the field for the left eye having a plurality of subfields and displaying an image signal for the left eye, the driver circuit displaying the image for the right eye and the image for the left eye in a manner such that, in each of the field for the right eye and the field for the left eye, a subfield having a smallest luminance weight is placed first, a subfield having a largest luminance weight is placed next, and other subfields are placed thereafter so as to have luminance weights sequentially decreasing; and
a timing signal output part for outputting a timing signal in synchronization with the field for the right eye and the field for the left eye; and
a pair of shutter glasses including:
a receiver for receiving the timing signal output from the timing signal output part; and
a right eye shutter and a left eye shutter, both being opened and closed in response to the timing signal.

## Amended claims

### Amended claims under Art. 19.1 PCT

**1.** (Amended) A method for driving a plasma display apparatus,
the plasma display apparatus including:
a plasma display panel having a plurality of discharge cells disposed therein, each of the discharge cells having a scan electrode, a sustain electrode, and a data electrode; and
a driver circuit for driving the plasma display panel,
the driving method comprising:
alternately displaying an image for a right eye and an image for a left eye on the plasma display panel by alternately repeating a field for the right eye and a field for the left eye, the field for the right eye having a plurality of subfields and displaying an image signal for the right eye, the field for the left eye having a plurality of subfields and displaying an image signal for the left eye; and
in each of the field for the right eye and the field for the left eye, placing a subfield having a smallest luminance weight first, a subfield having a largest luminance weight next, and other subfields thereafter so as to have luminance weights sequentially decreasing, such that a last subfield has a luminance weight larger than that of the first subfield.

**2.** The driving method of claim 1, wherein a timing signal is generated in synchronization with the field for the right eye and the field for the left eye.

**3.** The driving method of claim 1, wherein
in an initializing period of the subfield placed first in each of the field for the right eye and the field for the left eye, a forced initializing operation is performed so as to generate an initializing discharge regardless of an operation in the immediately preceding subfield, and
in initializing periods of the subfields placed thereafter, a selective initializing operation is performed so as to generate an initializing discharge in the discharge cells having undergone an address discharge in the immediately preceding subfields.

**4.** The driving method of claim 1, wherein in the discharge cell for undergoing an address discharge in any subfield in any of the field for the right eye and the field for the left eye, an address discharge is performed also in the subfield placed first in the field for the right eye and the field for the left eye.

**5.** (Amended) A plasma display apparatus comprising:
a plasma display panel having a plurality of discharge cells disposed therein, each of the discharge cells having a scan electrode, a sustain electrode, and a data electrode; and
a driver circuit for driving the plasma display panel,
wherein the driver circuit alternately displays an image for a right eye and an image for a left eye on the plasma display panel by alternately repeating a field for the right eye and a field for the left eye, the field for the right eye having a plurality of subfields and displaying an image signal for the right eye, the field for the left eye having a plurality of subfields and displaying an image signal for the left eye, and
the driver circuit displays the image for the right eye and the image for the left eye on the plasma display panel in a manner such that, in each of the field for the right eye and the field for the left eye, a subfield having a smallest luminance weight is placed first, a subfield having a largest luminance weight is placed next, other subfields are placed thereafter so as to have luminance weights sequentially decreasing, and a subfield having a luminance weight larger than that of the first subfield is placed last.

**6.** The plasma display apparatus of claim 5, wherein the driver circuit includes a timing signal output part for outputting a timing signal in synchronization with the field for the right eye and the field for the left eye.

**7.** (Amended) A plasma display system comprising:
a plasma display apparatus including:
a plasma display panel having a plurality of discharge cells disposed therein, each of the discharge cells having a scan electrode, a sustain electrode, and a data electrode;
a driver circuit for alternately displaying an image for a right eye and an image for a left eye on the plasma display panel by alternately repeating a field for the right eye and a field for the left eye, the field for the right eye having a plurality of subfields and displaying an image signal for the right eye, the field for the left eye having a plurality of subfields and displaying an image signal for the left eye, the driver circuit displaying the image for the right eye and the image for the left eye in a manner such that, in each of the field for the right eye and the field for the left eye, a subfield having a smallest luminance weight is placed first, a subfield having a largest luminance weight is placed next, other subfields are placed thereafter so as to have luminance weights sequentially decreasing, and a subfield having a luminance weight larger than that of the first subfield is placed last; and
a timing signal output part for outputting a timing signal in synchronization with the field for the right eye and the field for the left eye; and
a pair of shutter glasses including:
a receiver for receiving the timing signal output from the timing signal output part; and
a right eye shutter and a left eye shutter, both being opened and closed in response to the timing signal.
